Europäisches Patentamt

European Patent Office

Office européen des brevets

(19)

(11) **EP 0 656 329 B1**

(12) **FASCICULE DE BREVET EUROPEEN**

(45) Date de publication et mention
de la délivrance du brevet:
**17.06.1998 Bulletin 1998/25**

(51) Int Cl.⁶: **C04B 35/01**, C04B 35/80

(21) Numéro de dépôt: **94402747.3**

(22) Date de dépôt: **30.11.1994**

(54) **Procédé d'élaboration d'un matériau céramique par infiltration d'un précurseur dans un support poreux céramique**

Verfahren zur Herstellung von keramischen Werkstoffen durch impregnieren eines poreusen keramischen Trägers mit einem Vorläufer

Process for preparing a ceramic material by infiltrating a precursor into a porous ceramic support

(84) Etats contractants désignés:
**DE GB SE**

(30) Priorité: **02.12.1993 FR 9314467**

(43) Date de publication de la demande:
**07.06.1995 Bulletin 1995/23**

(73) Titulaire: **OFFICE NATIONAL D'ETUDES ET DE RECHERCHES AEROSPATIALES
92322 Chatillon Cédex (FR)**

(72) Inventeurs:
• **Colomban, Philippe
F-94260 Fresnes (FR)**
• **Wey, Muriel
F-75013 Paris (FR)**
• **Parlier, Michel
F-78960 Voisins le Bretonneux (FR)**

(74) Mandataire: **Plaçais, Jean-Yves
Cabinet Netter,
40, rue Vignon
75009 Paris (FR)**

(56) Documents cités:
EP-A- 0 179 589          EP-A- 0 224 873
EP-A- 0 337 832          EP-A- 0 383 164
US-A- 5 198 152

• **DATABASE WPI Week 9202, Derwent Publications Ltd., London, GB; AN 92-014218 & JP-A-3 265 573 (ISUZU CERAMICS) 26 Novembre 1991**

## Description

L'invention concerne un procédé d'élaboration d'un matériau céramique dans lequel on prépare un support poreux céramique cohérent comprenant une poudre céramique, on introduit dans les vides de ce support un liquide contenant au moins un précurseur de céramique et on soumet l'ensemble à un traitement à chaud pour transformer ledit précurseur en une matière céramique formant avec ladite poudre une structure continue, et pour consolider et/ou densifier ladite structure continue.

EP-A-130 105 décrit un tel procédé, dans lequel le support comprend des fibres céramiques noyées dans la poudre céramique. Dans ce procédé connu, le précurseur est choisi de telle sorte que la matière céramique résultant de la transformation ait la même composition que la poudre céramique. Dans ces conditions, l'opération de densification porte sur un matériau céramique chimiquement homogène et s'accompagne d'un retrait important. Les fibres noyées dans la poudre céramique ne subissant pas le même retrait, il en résulte que les fibres se désolidarisent de la matrice et/ou que cette dernière se fissure, ce qui nuit aux propriétés mécaniques du matériau composite obtenu.

Le but de l'invention est de remédier à ces inconvénients, en diminuant le retrait de la structure formée par la poudre céramique et par la matière céramique résultant de la transformation du précurseur, soit pour améliorer les propriétés mécaniques d'un matériau composite céramique comprenant des fibres, soit pour toute autre raison pour laquelle on peut souhaiter une diminution du retrait d'une structure céramique poreuse, y compris en l'absence de fibres. Par exemple, on peut souhaiter consolider la structure céramique en conservant un niveau de porosité élevé.

L'invention vise notamment un procédé du genre défini en introduction, et prévoit qu'au moins un précurseur de céramique est choisi de telle sorte que la matière céramique correspondante ait une température de frittage supérieure à celle de ladite poudre céramique et que la transformation correspondante ait lieu sans réaction avec cette dernière, de façon à limiter le retrait de ladite structure continue.

Lors de l'opération de densification à la température requise pour le frittage de la poudre, la matière céramique résultant de la transformation du précurseur, qui ne réagit pas avec la poudre et qui n'a pas atteint sa propre température de frittage, ne participe pas au frittage et ne subit donc pas de retrait. Par ailleurs, sa présence forme un obstacle au rapprochement mutuel des particules de poudre. Le retrait global de la structure poreuse est donc plus faible que celui que subirait dans les mêmes conditions une structure de même porosité, dans laquelle cette matière céramique serait remplacée par un même volume de la matière constitutive de la poudre.

D'autres caractéristiques, complémentaires ou alternatives, de l'invention sont énoncées ci-après :

- On met le support imprégné de liquide en contact avec un réactif à l'état fluide qui participe à ladite transformation en produisant une polymérisation ou une polycondensation du précurseur.

- L'action dudit réactif sur le précurseur provoque initialement une augmentation de la viscosité dudit liquide. Cette augmentation de viscosité favorise le maintien du liquide dans les pores du support.

- Ledit réactif est choisi parmi l'eau, l'oxygène, l'ammoniac, le sulfure d'hydrogène, les polyols.

- Ledit liquide est constitué essentiellement par le(s) dit(s) précurseur(s). Le choix d'un précurseur à l'état liquide et dont la porosité peut être modifiée, plutôt que d'un précurseur qui doit être mis en solution ou en suspension pour être introduit dans les pores, permet de remplir ceux-ci sensiblement complètement du précurseur et d'augmenter ainsi la quantité de matière céramique formée.

- Le précurseur est un composé organométallique (métal organique) de type alcoolate, métalloxane ou analogue conduisant par hydrolyse et polycondensation à un gel dont la décomposition thermique produit à son tour un composé céramique réfractaire constituant ladite matière céramique. Le composé organométallique a pour formule $M^p(OR)_n R'_m$, dans laquelle M représente l'élément métallique, R et R' sont des radicaux organiques, p étant égal à la valence de M avec $p=m+n>0$.

- On utilise comme précurseur un composé organométallique de zirconium et/ou un composé organométallique d'aluminium, notamment du propylate de zirconium et/ou du butylate d'aluminium. Il s'agit précisément de précurseurs à l'état liquide dont la viscosité augmente par suite du processus d'hydrolyse et de polycondensation.

- On utilise comme précurseur un polysilane et/ou un polycarbosilane et/ou un polysilazane, dont la viscosité augmente sous l'action dudit réactif.

- On utilise en outre comme précurseur au moins un alcoolate d'un métal choisi parmi le fer, le chrome, le cobalt, les lanthanides, les actinides, les terres rares et les métaux réfractaires autres que le zirconium et l'aluminium.

- On procède à des cycles successifs d'imprégnation par un liquide, identique ou différent d'un cycle à l'autre, contenant au moins un précurseur de céramique, le premier cycle étant effectué sur le support poreux d'origine et chacun des cycles ultérieurs sur le support déjà imprégné et ayant subi au moins une partie dudit traitement à chaud à la suite de la précédente imprégnation. On obtient ainsi une porosité résiduelle décroissante en fonction du nombre de cycles.

- Lors de l'un au moins desdits cycles ultérieurs, le liquide contient un précurseur d'un additif propre à modifier les propriétés de ladite matière céramique.

- Ledit précurseur d'additif est choisi parmi le composé $(C_4H_9O)_2Al-O-Si(OC_2H_5)_3$ et les éthylates de cérium, d'hafnium, d'yttrium et de germanium. La transformation du premier composé conduit, en présence du produit issu de la transformation du propylate de zirconium, à un mélange de mullite amorphe et de mullite cristallisée présentant des propriétés mécaniques optimales entre 1200 et 1400°C par suite d'un réarrangement de structure. Les produits de transformation de l'éthylate de germanium, qui retarde la densification de la zircone, et des autres éthylates cités, qui augmentent le point de fusion de la matière céramique, renforcent l'effet de celle-ci quant à la diminution du retrait de la poudre céramique.

- Lesdits cycles sont suivis de cycles supplémentaires comportant une imprégnation par une solution liquide, de faible viscosité, d'au moins un précurseur formant par traitement thermique une matière minérale réfractaire. Une telle solution est plus fluide que les alcoolates précités, et par conséquent pénètre mieux dans les pores résiduels très fins de la structure déjà chargée de matière céramique.

- Ladite solution liquide contient comme précurseur au moins un sel d'un métal conduisant à un oxyde dont le point de fusion est supérieur à 1600 °C, notamment un sel d'aluminium, de zirconium, de cobalt ou de chrome.

- Le support comprend des fibres céramiques enrobées dans ladite poudre céramique.

- Les fibres sont en au moins une matière choisie parmi le carbone, le carbure de silicium, le bore, le nitrure de bore, le nitrure de silicium, la mullite et l'alumine, l'aluminate d'yttrium, les oxynitrures et oxycarbures de silicium et/ou d'aluminium et/ou de titane.

- La poudre céramique est en au moins une matière dont le point de fusion est supérieur à 1700 °C, notamment l'alumine, la mullite, la magnésie, la zircone, le zircon, l'oxyde d'hafnium, l'oxyde de titane, le zirconate de titane, l'aluminate de titane, l'aluminate d'yttrium, le chromite de lanthane, l'oxyde de chrome, l'oxyde de cobalt, les oxydes de terres rares et de lanthanides, l'oxyde d'uranium ou les oxydes d'actinides.

Les alcoolates cités réagissent avec tous les susdits réactifs en conduisant à un gel. Les métalloxanes réagissent bien avec l'eau, l'oxygène et les polyols, et les polymères avec l'eau et l'oxygène.

Les caractéristiques et avantages de l'invention seront exposés plus en détail dans la description ci-après, en se référant aux dessins annexés, sur lesquels :

- la figure 1 est un diagramme montrant la variation de la contrainte à la rupture de différents matériaux composites céramiques en fonction de la température d'élaboration;

- la figure 2 est un diagramme montrant la variation de la porosité en fonction de la température de cuisson pour différents matériaux céramiques;

- les figures 3 et 4 sont des diagrammes représentant des répartitions de volumes de pores dans des matériaux composites; et

- la figure 5 est un diagramme représentant la variation de la porosité en fonction du nombre de cycles d'imprégnation dans le procédé selon l'invention.

Un matériau composite à renfort fibreux, ayant une faible porosité et de bonnes propriétés mécaniques, peut être obtenu par dépôt chimique en phase vapeur de la matière constitutive de la matrice dans les vides d'une structure fibreuse, selon le procédé décrit par exemple dans FR-A-2 401 888. Ce procédé a l'inconvénient d'être lent. Un procédé plus rapide consiste à introduire dans les vides de la structure fibreuse des particules de poudre céramique, et à densifier cette poudre. On peut utiliser à cet égard la technique employée pour les pâtes de porcelaine, dans laquelle une barbotine contenant en suspension la poudre céramique est introduite dans un filtre-presse sous une pression de quelques bars, le filtre laissant passer le liquide et retenant la poudre. Pour l'obtention du matériau composite, la structure fibreuse est disposée au préalable dans le filtre-presse, et se garnit de poudre, dont les grains doivent alors être submicroniques. La structure fibreuse ainsi remplie de poudre subit un premier traitement thermique de consolidation, nécessaire pour obtenir une résistance mécanique au moins de l'ordre de 30 MPa permettant sa manipulation. Dans le cas d'une poudre d'alumine ou de mullite, un tel traitement peut s'effectuer vers 1000°C et conduit à un objet d'une porosité de l'ordre de 33 à 38%. Le frittage du produit tel quel conduirait à un retrait d'autant plus important que la poudre est plus fine, avec les inconvénients mentionnés plus haut. Ce retrait est diminué par une infiltration, avant frittage, d'une matière céramique de même composition chimique que celle de la poudre, qui par sa seule présence réduit la porosité, selon EP-A-130 105, et davantage encore par le procédé selon l'invention, dans lequel la matière céramique infiltrée ne participe pas au frittage.

On peut utiliser comme précurseur, outre des alcoolates ou des esters hydrolysables qui polymérisent suite à une réaction de polycondensation en donnant un gel qui par traitement thermique conduira à un produit poreux amorphe puis à une céramique, tout liquide polymérisable ou gélifiant sous l'action d'un réactif chimique avec ou sans activation thermique, en particulier des liquides conduisant à la formation de carbures, nitrures, oxycarbures ou oxynitrures de Si, Al, Ti, Fe ou Co. Ledit précurseur est choisi parmi les composés de formules $(OR)_n M$, $(OR^1)_{n1} M^1\text{-}0\text{-}M^2\text{-}(OR^2)_{n2}$, $(OR)_n MR^y$, $(OR^1)_{n1} R^3 M^1\text{-}O\text{-}M^2 (OR^2)_{n2} R^4$ et analogue dans lesquelles :

- M ou $M^1$ représente l'élément métallique précité;

- R, $R^1$, $R^2$, $R^y$, $R^3$, $R^4$ sont des radicaux hydrocarbonés monovalents, notamment de type alkyl, par exemple : méthyl, propyl, butyl, vinyl, phényl...

- $M^2$ est choisi parmi Si, Al, Ti et Zr,

n, n1, n2 étant des nombres entiers déterminés par les valences de façon à équilibrer les formules.

Le choix de la nature des précurseurs permet de régler la composition chimique du produit final.

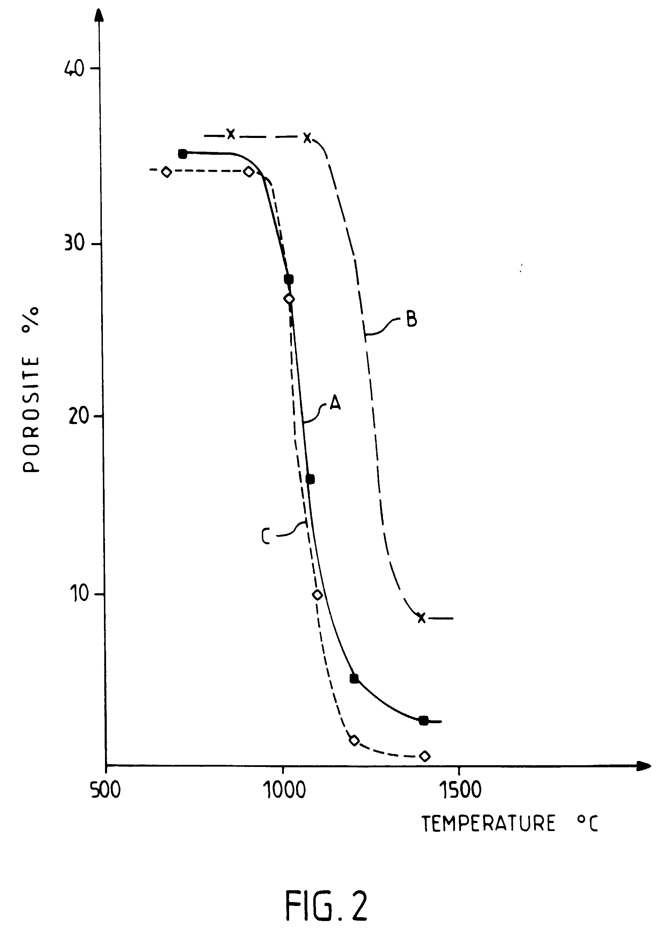

L'influence de la nature de la matière céramique fournie par le précurseur est illustrée par la figure 2 montrant la variation, en fonction de la température de cuisson, de la porosité d'un monolithe d'alumine avec ou sans infiltration par un précurseur de céramique. La courbe A est relative à la structure poreuse de départ, non infiltrée, obtenue à partir de poudre d'alumine commercialisée par la Société SUMITOMO sous la désignation AKP 50, d'un diamètre équivalent de 0,45 µm. Les courbes B et C sont relatives à la même structure poreuse, infiltrées respectivement par du propylate de zirconium qui conduit à la formation de $ZrO_2$, et par du butylate de titane conduisant à la formation de $TiO_2$. On constate que $ZrO_2$, dont la température de frittage est supérieure à celle de l'alumine, élève la température pour laquelle une porosité donnée est obtenue, ainsi que la porosité finale, ce qui correspond à une diminution du retrait. On observe les effets inverses pour $TiO_2$, dont la température de frittage est plus basse que celle de l'alumine et qui joue le rôle d'activateur de frittage.

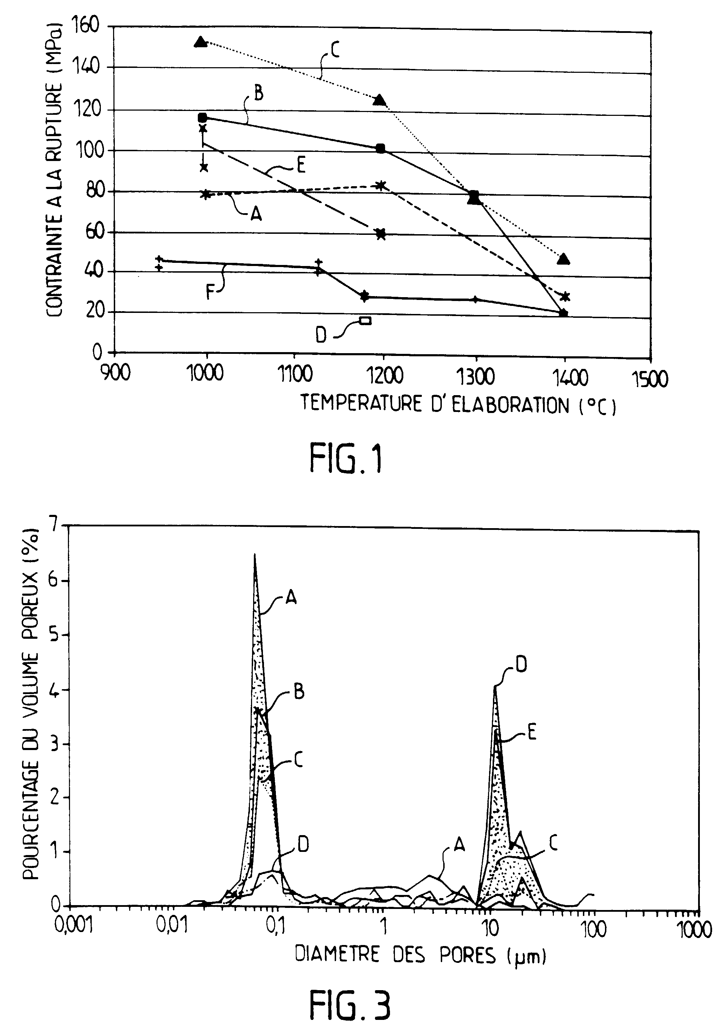

Ces données sont complétées par celles de la figure 1, qui montre l'évolution de la contrainte à la rupture mesurée à la température ambiante par l'essai de flexion trois points, en fonction de la température d'élaboration, pour différents matériaux composites obtenus à partir d'une même structure fibreuse et d'une même poudre d'alumine, sans ou avec infiltration par différents précurseurs de céramique, comme décrit dans les exemples et l'exemple comparatif ci-après.

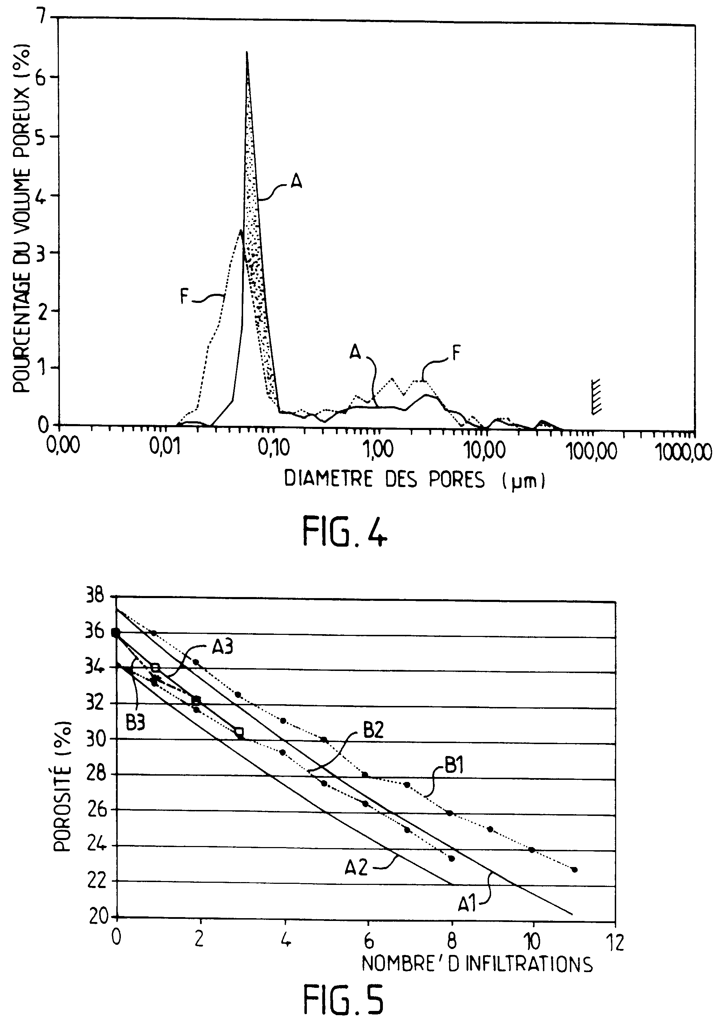

La figure 3 montre la répartition volumique des pores d'un matériau composite pour différentes températures de frittage. Ce matériau composite comprend une structure fibreuse tridirectionnelle en carbone fabriquée par la SOCIÉTÉ EUROPÉENNE DE PROPULSION selon FR-A-2 584 106, et commercialisée sous la dénomination NOVOLTEX. On y introduit la poudre d'alumine AKP 50 précitée par filtration d'une barbotine sous une pression de 5 bars. Les courbes A, B, C, D et E de la figure 3 sont obtenues respectivement après frittage à 1000, 1100, 1200, 1300 et 1400°C. On constate une disparition progressive des pores submicroniques correspondant aux interstices entre les grains de poudre, et entre ceux-ci et les fibres, au profit de fissures d'environ 10 µm, produites par un retrait hétérogène en présence des fibres, qui détériore gravement les propriétés mécaniques du matériau.

La même courbe A est reprise sur la figure 4, avec une courbe F montrant la répartition des pores, après frittage à 1000°C, de la même structure poreuse ayant subi quatre cycles d'imprégnation par du propylate de zirconium comme décrit dans l'exemple 2 ci-après. La présence d'oxyde de zirconium dans le produit final provoque à la fois une diminution des dimensions des plus petits pores et une diminution du volume des plus gros pores.

Dans le procédé selon l'invention, le remplissage des pores par le liquide a lieu sous l'action des forces capillaires, l'usage d'un autoclave accélérant ce processus.

La figure 5 montre des courbes théoriques et pratiques d'évolution de la porosité en fonction du nombre de cycles d'infiltration - cuisson. Pour tracer les courbes théoriques, on a supposé qu'au cours d'une infiltration, l'ensemble de la porosité ouverte était remplie par le liquide dans lequel est immergé le support poreux.

Soit $V_0$ le volume poreux initial du support. Après une infiltration suivie d'une hydrolyse puis d'un recuit à 1000°C par exemple, le volume poreux deviendra $V_f = V_0 - V_p$, $V_p$ étant le volume occupé par la matière céramique formée.

On peut écrire :

$$V_f = V_0 - V_p = V_0 - \frac{m_p}{d_p}$$

$d_p$ étant la densité de la poudre sol-gel après recuit à 1000°C.

Pour chaque liquide, on peut calculer un rendement r tel que :

$$r = \frac{m_p}{m_a}$$

$m_a$ étant la masse de liquide utilisée pour obtenir la masse $m_p$ de matière céramique.

Il vient alors :

$$V_f = V_0 - \frac{rm_a}{d_p}$$

$$V_f = V_0 - \frac{rV_a d_a}{d_p}$$

$d_a$ étant la densité de l'alcoolate.

En supposant que le liquide remplissait tout le volume poreux, on a $V_a = V_0$, d'où :

$$V_f = V_0 - \frac{rV_0 d_a}{d_p}$$

$$V_f = V_0(1 - \frac{rd_a}{d_p})$$

Si l'on ramène $V_f$ et $V_0$ au volume du support, on peut écrire :

$$P_f = P_0(1 - \frac{rd_a}{d_p})$$

$P_0$ et $P_f$ étant la porosité avant et après infiltration respectivement.

Après plusieurs infiltrations comportant chacune un remplissage de l'ensemble du volume poreux ouvert, on peut écrire :

$$P_{n+1} = P_n(1 - \frac{rd_a}{d_p})$$

$P_{n+1}$ étant la porosité après la n+1ième infiltration et $P_n$ étant la porosité après la nième infiltration, et donc :

$$\boxed{P_{n+1} = P_0(1 - \frac{rd_a}{d_p})^{n+1}}$$

On peut alors, connaissant la porosité initiale du support et pour un liquide donné, calculer la courbe théorique d'évolution de la porosité en fonction du nombre d'infiltrations (figure 5).

Ainsi, pour le propylate de zirconium :

r = 28,7%
$d_a$ = 1,058
$d_p$ = 5,63

On aura donc : $P_{n+1} = P_0(0,946)^{n+1}$

Les courbes A1, A2 et A3 de la figure 5 représentent cette variation théorique de porosité par infiltration de propylate de zirconium dans des supports poreux de porosité initiale légèrement différente, et les courbes B1, B2 et B3 représentent les variations de porosité réellement constatées. Dans le cas des courbes B1 et B2, les infiltrations ont été réalisées par simple capillarité, et la courbe B3 a été obtenue en réalisant les infiltrations en autoclave sous une pression de 5 bars pendant une heure. On constate que dans ces conditions l'écart entre courbe théorique et courbe réelle est pratiquement supprimé.

Exemple 1

On prépare une barbotine composée de poudre d'alumine AKP 50, d'eau distillée et d'acide nitrique en quantité suffisante pour atteindre pH4, on la disperse par ultrasons et agitation et on l'injecte dans un filtre-presse de la façon décrite dans FR-A-2 526 785, avec une pression d'air de 0,5 MPa au-dessus de la barbotine et un vide dynamique primaire sous le support du filtre. Le filtre est prévu pour retenir les particules de poudre. Après deux heures, on obtient un gâteau d'alumine humide de dimensions 66 mm x 40 mm x 10 mm et dont la consistance permet l'ouverture de l'enceinte et son séchage en atmosphère humide. Ce séchage s'effectue à des paliers de températures successifs de 60, 80 et 120°C pendant des durées d'environ trois heures chacun, ce séchage lent permettant d'éviter une évaporation rapide de l'eau et de limiter la fissuration du support d'alumine. Celui-ci est ensuite cuit à 1000°C, après quoi ses propriétés mécaniques en flexion, à température ambiante, sont de 50 MPa et sa porosité de 38%. Un frittage à 1100 et 1200°C donnerait des propriétés mécaniques de 100 et 130 MPa et des porosités de 35% et 25%, respectivement.

Le support traité à 1000°C est porté à 200°C pendant deux heures dans une étuve, afin d'éliminer l'humidité qu'il aurait pu recueillir entre temps, puis est immergé dans du propylate de zirconium, le récipient contenant celui-ci étant plongé dans un bain soumis à des ultrasons pendant environ 30 minutes. Le support imprégné est alors introduit dans un autoclave et soumis pendant environ 30 minutes à une atmosphère de vapeur d'eau sous une pression de 1,5 bar, afin d'hydrolyser in-situ l'alcoolate. Après sortie de l'autoclave, on sèche le produit pendant trois à quatre heures à 200°C, puis on le recuit à 1000°C sous vide dans les conditions indiquées ci-dessus. Le support est chauffé à vitesse constante de la température ambiante à 1000°C pendant environ 50 minutes, puis laissé à cette température pendant environ une heure.

Après ce premier cycle d'imprégnation, le gain de masse est de 4%, et la réduction de porosité de 3%. Après quatre cycles semblables, le gain de masse est de 17% et la réduction de porosité de 7%. Les propriétés mécaniques en flexion à température ambiante sont alors de 100 MPa. Elles sont portées à 150 et 170 MPa par une cuisson à 1100 et 1200°C respectivement.

Pour déterminer la contrainte à rupture en flexion trois points, à l'air et à température ambiante, on utilise des éprouvettes taillées dans l'échantillon et dont la longueur est de 40 mm et la section 8 x 2 mm$^2$. La force est appliquée perpendiculairement à la grande face de l'éprouvette, la distance entre appuis étant de 30 mm et la vitesse de descente de la charge étant de 0,3 mm/mn.

Pour les essais à 1200 ou 1300°C, présentés dans les exemples suivants, ils s'effectuent dans une atmosphère d'argon sur des éprouvettes de 66 mm x 8 mm x 2 mm, la distance entre appuis étant de 50 mm et la vitesse de descente de la charge de 0,3 mm/mn.

Ces conditions d'essais sont valables pour tous les exemples, sauf indications contraires.

### Exemple 2

On prépare et on filtre une barbotine comme décrit dans l'exemple 1, à ceci près qu'on place sur le filtre une structure fibreuse NOVOLTEX formée de fibres de 7 à 9 µm de diamètre, occupant 26 à 30% du volume apparent de la structure. La poudre d'alumine remplit ainsi les vides de la structure fibreuse. On procède au séchage et à la cuisson sous vide à 1000°C du support poreux ainsi obtenu, comme décrit dans l'exemple 1. Il se produit lors de la cuisson un début d'interaction entre les grains d'alumine rendant le support manipulable.

Celui-ci présente alors les caractéristiques suivantes :

dimensions : 66 mm x 40 mm x 8 mm
densité : 2
porosité : 36%
taux volumique des fibres : 26%.

On réalise quatre cycles d'imprégnation par le propylate de zirconium, comme décrit dans l'exemple 1, conduisant aux propriétés suivantes :

densité : 2,4
porosité : 27%
augmentation de masse : 19%.

Les caractéristiques mécaniques en flexion trois points à la température ambiante sont les suivantes :

contrainte à rupture : 78 MPa
module d'Young apparent (pente de la courbe contrainte/déformation enregistrée lors de l'essai de flexion) : 8 GPa.

On procède ensuite à un cinquième cycle d'imprégnation en utilisant comme liquide le composé $(C_4H_9O)_2Al\text{-}O\text{-}Si(OC_2H_5)_3$ fourni par la Société Hüls France sous la référence 084. L'hydrolyse-polycondensation de ce composé conduit à un gel qui se transforme en un mélange de mullite amorphe et de mullite cristallisée, avec un gonflement au-dessus de 1100°C, par réaction avec la zircone formée à l'issue des cycles précédents. Ce gonflement, en s'opposant au rapprochement des grains à haute température, accentue le blocage du retrait.

Les courbes A et B de la figure 1 montrent la variation de la résistance à la rupture en flexion, en fonction de la température de cuisson, pour le matériau composite de cet exemple, avant et après le cinquième cycle d'imprégnation. Dans ce dernier cas, la résistance, à température ambiante, qui est de 110 MPa pour une température de cuisson de 1000°C, reste supérieure à 100 MPa pour 1200°C et voisine de 80 MPa pour 1300°C. La résistance en flexion mesurée à 1200°C est de 170 MPa et à 1300°C de 130 MPa.

### Exemple 3

On procède comme dans l'exemple 2 mais au lieu de gélifier le propylate de zirconium en autoclave par hydrolyse directe avec l'eau, on immerge, à chaque cycle d'imprégnation, le support dans un mélange d'acide acétique et de propanol 2 (volumes 1-1) pendant 4 heures.

Les caractéristiques du support traité sont les mêmes que dans l'exemple 2.

### Exemple 4

On procède comme dans l'exemple 2 mais au lieu d'utiliser, pour le cinquième cycle d'imprégnation, le composé fourni par la Société Hüls France sous la référence 084, on utilise un mélange de méthylate de silicium, de n-butanediol et de tétrachlorure de carbone (volumes 1-1-1). On immerge le support dans ce précurseur, on étuve, à 40°C et pendant 48 heures. Le support est ensuite chauffé sous vide à 1200°C.

Les caractéristiques du support ainsi traité sont les mêmes que dans l'exemple 2.

### Exemple 5

On procède comme dans l'exemple 2, en effectuant huit cycles d'infiltration par le propylate de zirconium. Les caractéristiques du support initial étant les mêmes que dans l'exemple précédent, celles du matériau composite obtenu sont les suivantes :

densité : 2,8
porosité : 22,6%
augmentation de masse : 25%
contrainte à la rupture : 87 MPa
module d'Young apparent : 10 GPa.

Une infiltration supplémentaire par l'éthylate de germanium opérée à l'abri de l'humidité permet de retarder la densification de la zircone. Ce cycle supplémentaire s'effectue dans les mêmes conditions que les précédents.

Après cuisson à 1000°C, la contrainte à rupture en flexion à température ambiante est portée à 100 MPa et le module d'Young apparent à 13 GPa. La densité du matériau est de 2,9 et sa porosité de 20,5%.

Exemple 6

On utilise un support obtenu de la même façon et ayant les mêmes dimensions que celui de l'exemple 2, et présentant en outre les propriétés suivantes :

densité : 2,1
porosité : 34%
taux volumique de fibre : 27%.

On réalise huit cycles d'imprégnation dans les conditions décrites précédemment, en utilisant comme liquide le butylate d'aluminium pour les quatre premiers cycles et le propylate de zirconium pour les cycles suivants.

Le matériau composite obtenu présente les caractéristiques suivantes :

densité : 2,9
porosité : 21%
augmentation de masse : 31%.

Les caractéristiques mécaniques en flexion trois points à température ambiante sont les suivantes :

contrainte à la rupture : 153 MPa
module d'Young apparent : 32 GPa.

Les caractéristiques mécaniques en traction sont les suivantes :

contrainte à la rupture : 70 MPa
déformation à la rupture : 0,63%
module d'Young apparent : 20 GPa.

L'essai en traction s'effectue à température ambiante sur des éprouvettes dont la partie utile a une longueur de 10 mm et une section de 8 x 2 mm$^2$. La charge est appliquée dans le plan du tissu à la vitesse définie dans la norme WI 25 ENV.

La variation en fonction de la température de cuisson de la contrainte à la rupture en flexion trois points à température ambiante est donnée par la courbe C de la figure 1. La contrainte en flexion mesurée à 1200°C et 1300°C est de 800 MPa.

Exemple 7

On part d'une structure fibreuse tridirectionnelle commercialisée par la Société BROCHIER sous la référence 3D-E2319, formée de fils orientés selon trois directions mutuellement orthogonales, chaque fil étant composé de 500 fibres de carbure de silicium produites par la Société NIPPON CARBON sous la référence NICALON NLM202, d'un diamètre moyen de 13 μm. Cette structure fibreuse, dont le taux volumique de fibres et de 35%, est garnie de poudre d'alumine comme décrit dans l'exemple 2.

Après cuisson sous vide à 1200°C, la porosité est d'environ 30% et la résistance mécanique en flexion de 30 MPa.

On réalise un cycle d'imprégnation en utilisant comme liquide un mélange équimoléculaire de butylate d'aluminium et de propylate de zirconium. Après hydrolyse comme dans les exemples précédents et cuisson à 1200°C, la résistance mécanique dépasse 50 MPa.

Exemple 8

On utilise un support poreux semblable à celui de l'exemple 2, sous réserve du taux volumique de fibres qui est de 27%. On procède à des cycles d'imprégnation dans les mêmes conditions qu'aux exemples 1 à 6, en utilisant comme liquide le butylate d'aluminium pour les cycles de rang impair et le propylate de zirconium pour les cycles de rang pair.

Le matériau composite obtenu présente les caractéristiques suivantes :

densité : 2,7
porosité : 22,7%
augmentation de masse : 34%.

Les caractéristiques mécaniques en traction à température ambiante sont les suivantes :

contrainte à la rupture : 77 MPa
déformation à la rupture : 0,48%
module d'Young apparent : 28 GPa.

Exemple 9

On prépare un support poreux comme décrit dans l'exemple 2, ses dimensions étant les mêmes. Il présente par ailleurs les caractéristiques suivantes :

densité : 2,2
porosité : 31,5%
taux volumique de fibres : 28,5%.

On réalise huit cycles d'imprégnation par le propylate de zirconium, comme décrit dans l'exemple 5.

Un neuvième cycle est effectué en utilisant comme liquide le butylate de titane.

Le matériau composite obtenu présente les caractéristiques suivantes :

densité : 2,82
porosité : 20%

augmentation de masse : 30%.

Les caractéristiques mécaniques en flexion trois points à température ambiante sont les suivantes : après cuisson à 1000°C

contrainte à la rupture : 100 MPa
module d'Young apparent : 16 GPa

après cuisson à 1200°C

contrainte à la rupture : 59 MPa
module d'Young apparent : 15 GPa.

Cette variation de la contrainte à la rupture est illustrée par la courbe E de la figure 1. On voit que la valeur à 1000°C est améliorée par rapport à quatre cycles d'imprégnation par le propylate de zirconium (courbe A, exemple 2). A 1200°C, la contrainte à la rupture est détériorée, mais reste supérieure à celle d'un support semblable n'ayant subi aucune imprégnation par un précurseur liquide (courbe F).

Exemple 10

On utilise un support poreux traité à 1000°C comme décrit dans l'exemple 2. Le support poreux est imprégné sous vide par un mélange constitué de 0,4 mole de butylate d'aluminium et de 0,6 mole de propylate de zirconium.

Le matériau obtenu présente les caractéristiques suivantes :

- densité : 2,18
- porosité : 29%.

Le support traité est étuvé à 200°C puis immergé dans un bain de polyvinylsilane (PVS non stabilisé à l'air commercialisé par la Société Flamel Technologies) disposé en autoclave pour pouvoir y appliquer une pression de 5 bars pendant 10 minutes.

Le support ainsi imprégné est exposé à l'air pendant 30 minutes, pour augmenter la viscosité du précurseur, puis chauffé sous azote selon le cycle suivant : température portée progressivement de 20 à 250°C en 115 minutes, stabilisation à 250°C pendant une heure puis température portée de 250 à 1000°C en 25 heures.

Le matériau composite obtenu présente les caractéristiques suivantes :

densité : 2,33
porosité : 22%
augmentation de masse : 6,7%.

Exemple comparatif

On prépare de la façon décrite dans l'exemple 2 un support poreux composite qu'on découpe en barrettes de dimensions 66 mm x 8 mm x 2 mm. Ce support a une densité de 2,2 et une porosité de 30,5%. Après un cycle d'imprégnation par le butylate de titane et un recuit à 1200°C, on obtient les caractéristiques suivantes :

densité : 2,26
porosité : 27,4%
augmentation de masse : 4%.

Les caractéristiques mécaniques en flexion trois points à température ambiante sont les suivantes :

contrainte à la rupture : 17 MPa
module d'Young apparent : 2 GPa.

Cette valeur de résistance à la rupture est indiquée par le point D sur la figure 1, qui se trouve au-dessous de la courbe F correspondant au support non imprégné. Ce résultat est dû à l'accélération du frittage de la matrice d'alumine par le titane.

Dans les exemples ci-dessus, des résultats sensiblement identiques peuvent être obtenus en remplaçant le traitement à l'autoclave par une immersion du support imprégné dans de l'eau bouillante à la pression atmosphérique pendant deux heures.

**Revendications**

1. Procédé d'élaboration d'un matériau céramique dans lequel on prépare un support poreux céramique cohérent comprenant une poudre céramique, on introduit dans les vides de ce support un liquide contenant au moins un précurseur de céramique et on soumet l'ensemble à une opération de consolidation et/ou densification à la température requise pour le frittage de la poudre, caractérisé en ce que la matière céramique résultant de la transformation d'au moins un précurseur a une température de frittage supérieure à celle de ladite poudre céramique et ne réagit pas avec cette dernière lors de cette opération de consolidation et/ou densification, de façon à limiter le retrait de ladite poudre et de ladite matière céramique.

2. Procédé selon la revendication 1, caractérisé en ce qu'on met le support imprégné de liquide en contact avec un réactif à l'état fluide qui participe à ladite transformation en produisant une polymérisation ou une polycondensation du précurseur.

3. Procédé selon la revendication 2, caractérisé en ce que l'action dudit réactif sur le précurseur provoque initialement une augmentation de la viscosité dudit liquide.

4. Procédé selon la revendication 3, caractérisé en ce que ledit réactif est choisi parmi l'eau, l'oxygène, l'ammoniac, l'acide acétique, le sulfure d'hydrogène, les polyols.

5. Procédé selon l'une des revendications 3 et 4, caractérisé en ce que ledit liquide est constitué essentiellement par le(s)dit(s) précurseur(s).

6. Procédé selon l'une des revendications 3 à 5, caractérisé en ce que le précurseur est un composé organométallique (métal organique) de type alcoolate, métalloxane ou analogue conduisant par hydrolyse et polycondensation à un gel dont la décomposition thermique produit à son tour un composé céramique réfractaire constituant ladite matière céramique.

7. Procédé selon la revendication 6, caractérisé en ce qu'on utilise comme précurseur un composé organométallique de zirconium et/ou un composé organométallique d'aluminium.

8. Procédé selon la revendication 7, caractérisé en ce qu'on utilise comme précurseur du propylate de zirconium et/ou du butylate d'aluminium.

9. Procédé selon la revendication 6, caractérisé en ce qu'on utilise comme précurseur un polysilane et/ou un polycarbosilane et/ou un polysilazane.

10. Procédé selon l'une des revendications 6 à 9, caractérisé en ce qu'on utilise en outre comme précurseur au moins un alcoolate d'un métal choisi parmi le fer, le chrome, le cobalt, les lanthanides, les actinides, les terres rares et les métaux réfractaires autres que le zirconium et l'aluminium.

11. Procédé selon l'une des revendications précédentes, caractérisé en ce qu'on procède à des cycles successifs d'imprégnation par un liquide, identique ou différent d'un cycle à l'autre, contenant au moins un précurseur de céramique, le premier cycle étant effectué sur le support poreux d'origine et chacun des cycles ultérieurs sur le support déjà imprégné et ayant subi au moins une partie dudit traitement à chaud à la suite de la précédente imprégnation.

12. Procédé selon la revendication 11, caractérisé en ce que, lors de l'un au moins desdits cycles ultérieurs, le liquide contient un précurseur d'un additif propre à modifier les propriétés de ladite matière céramique.

13. Procédé selon la revendication 12, caractérisé en ce que ledit précurseur d'additif est choisi parmi le composé $(C_4H_9O)_2Al-O-Si(OC_2H_5)_3$ et les éthylates de cérium, d'hafnium, d'yttrium et de germanium.

14. Procédé selon la revendication 11, rattachée à la revendication 5, ou selon l'une des revendications 12 et 13, caractérisé en ce que lesdits cycles sont suivis de cycles supplémentaires comportant une imprégnation par une solution liquide, de faible viscosité, d'au moins un précurseur formant par traitement thermique une matière minérale réfractaire.

15. Procédé selon la revendication 14, caractérisé en ce que ladite solution liquide contient comme précurseur au moins un sel d'un métal conduisant à un oxyde dont le point de fusion est supérieur à 1600 °C, notamment un sel d'aluminium, de zirconium, de cobalt ou de chrome.

16. Procédé selon l'une des revendications précédentes, caractérisé en ce que le support comprend des fibres céramiques noyées dans ladite poudre céramique.

17. Procédé selon la revendication 16, caractérisé en ce que les fibres sont en au moins une matière choisie parmi le carbone, le carbure de silicium, le bore, le nitrure de bore, le nitrure de silicium, la mullite et l'alumine, l'aluminate d'yttrium, les oxynitrures et les oxycarbures de silicium et/ou d'aluminium et/ou de titane.

18. Procédé selon l'une des revendications précédentes, caractérisé en ce que la poudre céramique est en au moins une matière dont le point de fusion est supérieur à 1700 °C, notamment l'alumine, la magnésie, la mullite, la zircone, le zircon, l'oxyde d'hafnium, l'oxyde de titane, le zirconate de titane, l'aluminate de titane, l'aluminate d'yttrium, le chromite de lanthane, l'oxyde de chrome, l'oxyde de cobalt, les oxydes de terres rares et de lanthanides, l'oxyde d'uranium ou les oxydes d'actinides.

**Patentansprüche**

1. Verfahren zur Herstellung eines keramischen Werkstoffs, bei dem man einen ein keramisches Pulver umfassenden kohärenten porösen keramischen Träger herstellt, die Hohlräume dieses Trägers mit einer Flüssigkeit tränkt bzw. imprägniert, die wenigstens einen Keramik-Vorläufer enthält, und das Ganze bei der für das Sintern des Pulvers erforderlichen Temperatur einer Verfestigungs- und/oder Verdichtungsoperation unterzieht, **dadurch gekennzeichnet,** daß der aus der Umwandlung wenigstens eines Vorläufers resultierende keramische Werkstoff eine Sintertemperatur hat, die höher ist als die des genannten keramischen Pulvers und bei dieser Verfestigungs- und/oder Verdichtungsoperation nicht mit diesem letzteren reagiert, um den Schwund des genannten Pulvers und des genannten keramischen Materials zu begrenzen.

2. Verfahren nach Anspruch 1, dadurch gekennzeichnet, daß man den mit Flüssigkeit imprägnierten Träger in Kontakt bringt mit einem Reagens im flüssigen Zustand, das sich an der genannten Umwandlung beteiligt, indem es eine Polymerisation oder eine Polykondensation des Vorläufers bewirkt.

3. Verfahren nach Anspruch 2, dadurch gekennzeichnet, daß diese Wirkung des genannten Reagens auf den Vorläufer zunächst eine Zunahme der Viskosität der genannten Flüssigkeit verursacht.

4. Verfahren nach Anspruch 3, dadurch gekennzeichnet, das das genannte Reagens ausgewählt wird unter Wasser, Sauerstoff, Ammoniak, Essigsäure, Hydrogensulfid und den Polyalkoholen.

5. Verfahren nach einem der Ansprüche 3 und 4, dadurch gekennzeichnet, daß die genannte Flüssigkeit im wesentlichen durch den (die) genannten Vorläufer gebildet wird.

6. Verfahren nach einem der Ansprüche 3 bis 5, dadurch gekennzeichnet, daß der Vorläufer eine organometallische Verbindung (organisches Metall) des Typs Alkoholat, Metalloxan oder analog ist, die durch Hydrolyse und Polykondensation zu einem Gel führt, dessen thermische Zersetzung eine refraktäre keramische Verbindung erzeugt, die den genannten keramischen Werkstoff bildet.

7. Verfahren nach Anspruch 6, dadurch gekennzeichnet, daß man als Vorläufer eine organometallische Zirkonverbindung und/oder eine organometallische Aluminiumverbindung verwendet.

8. Verfahren nach Anspruch 7, dadurch gekennzeichnet, daß man als Vorläufer Zirkonpropylat und/oder Aluminiumbutylat verwendet.

9. Verfahren nach Anspruch 6, dadurch gekennzeichnet, daß man als Vorläufer ein Polysilan und/oder ein Polycarbosilan und/oder ein Polysilazan verwendet.

10. Verfahren nach einem der Ansprüche 6 bis 9, dadurch gekennzeichnet, daß man außerdem als Vorläufer wenigstens ein Alkholat eines Metalls verwendet, ausgewählt unter Eisen, Chrom, Kobalt, den Lanthanoiden, den Actinoiden, den seltenen Erden und den anderen refraktären Metallen außer Zirkon und Aluminium.

11. Verfahren nach einem der vorangehenden Ansprüche, dadurch gekennzeichnet, daß man aufeinanderfolgende Zyklen der Imprägnierung mit einer von Zyklus zu Zyklus gleichen oder unterschiedlichen Flüssigkeit durchführt, die wenigstens einen Keramik-Vorläufer enthält, wobei der erste Zyklus an dem porösen ursprünglichen Träger durchgeführt wird und jeder der späteren Zyklen an dem schon imprägnierten Träger, der in der Folge der vorangehenden Imprägnierung wenigstens schon einem Teil der genannten Warmbehandlung unterzogen wurde.

12. Verfahren nach Anspruch 11, dadurch gekennzeichnet, daß bei wenigstens einem der späteren Zyklen die Flüssigkeit einen Vorläufer eines Additivs enthält, das die Eigenschaften des genannten keramischen Werkstoffs verändern kann.

13. Verfahren nach Anspruch 12, dadurch gekennzeichnet, daß der genannte Additiv-Vorläufer ausgewählt wird zwischen $(C_4H_9O)_2Al-O-Si(OC_2H_5)_3$ und den Cerium-, Hafnium-, Yttrium- und Germaniumethylaten.

14. Verfahren nach Anspruch 11 in Verbindung mit dem Anspruch 5 oder nach einem der Ansprüche 12 und 13, dadurch gekennzeichnet, daß den genannten Zyklen zusätzliche Zyklen folgen, die eine Imprägnierung durch eine flüssige Lösung geringer Viskosität umfassen, wobei wenigstens ein Vorläufer durch Wärmebehandlung ein refraktäres mineralisches Material bildet.

15. Verfahren nach Anspruch 14, dadurch gekennzeichnet, daß die genannte flüssige Lösung als Vorläufer wenigstens ein Salz eines Metalls enthält, das zu einem Oxid führt, dessen Schmelzpunkt höher als 1600°C ist, insbesondere ein Aluminium-, Zirkon-, Kobalt- oder Chromsalz.

16. Verfahren nach einem der vorangehenden Ansprüche, dadurch gekennzeichnet, daß der Träger keramische Fasern umfaßt, eingebettet in das genannte keramische Pulver.

17. Verfahren nach Anspruch 16, dadurch gekennzeichnet, daß die Fasern aus wenigstens einem unter Kohlenstoff, Siliciumkarbid, Bor, Bornitrid, Siliciumnitrid, Aluminiumoxid und Mullit, Yttriumaluminat den Oxynitriden oder den Oxykarbiden von Silicium und/oder Aluminium und/oder Titan ausgewählten Material sind.

18. Verfahren nach einem der vorangehenden Ansprüche, dadurch gekennzeichnet, daß das keramische Pulver aus wenigstens einem Material ist, dessen Schmelzpunkt höher als 1700°C ist, insbesondere aus Aluminiumoxid, Magnesiumoxid, Mullit, Zirkonoxid, Zirkon, Hafniumoxid, Titanoxid, Titanzirkonat, Titanaluminat, Yttriumaluminat, Lathanchromit, Chromoxid, Kobaltoxid, den Seltenerden- und Lanthanoidenoxiden, dem Uranoxid oder den Actinoidenoxiden.

## Claims

1. A process for the preparation of a ceramic material, in which a coherent porous ceramic support comprising a ceramic powder is prepared, a liquid containing at least one ceramic precursor is introduced into the voids in this support and this combination is subjected to a consolidation and/or densification operation at the temperature necessary for sintering of the powder, characterised in that the ceramic material resulting from the transformation of at least one precursor has a higher sintering temperature than that of said ceramic powder and does not react with the latter during this consolidation and/or densification operation, such that the contraction of said powder and of said ceramic material is limited.

2. A process according to claim 1, characterised in that the liquid-impregnated support is brought into contact with a reagent in the fluid state which participates in said transformation by producing polymerisation or polycondensation of the precursor.

3. A process according to claim 2, characterised in that the action of said reagent with respect to the precursor initially causes an increase in the viscosity of said liquid.

4. A process according to claim 3, characterised in that said reagent is selected from water, oxygen, ammonia, acetic acid, hydrogen sulphide and polyols.

5. A process according to either one of claims 3 and 4, characterised in that said liquid consists substantially of said precursor(s).

6. A process according to any one of claims 3 to 5, characterised in that the precursor is an organometallic (organic metal) compound of the alcoholate or metalloxane type or the like, resulting, by hydrolysis and polycondensation, in a gel the thermal decomposition of which in turn produces a refractory ceramic compound constituting said ceramic material.

7. A process according to claim 6, characterised in that the precursor used is an organometallic compound of zirconium and/or an organometallic compound of aluminium.

8. A process according to claim 7, characterised in that the precursor used is zirconium propylate and/or aluminium butylate.

9. A process according to claim 6, characterised in that the precursor used is a polysilane and/or a polycarbosilane and/or a polysilazane.

10. A process according to any one of claims 6 to 9, characterised in that at least one alcoholate of a metal selected from iron, chromium, cobalt, lanthanides, actinides, noble earths and refractory metals other than zirconium and aluminium is also used as a precursor.

11. A process according to any one of the preceding claims, characterised in that it comprises successive cycles involving impregnation by a liquid, which may be identical or different from one cycle to the next and which contains at least one ceramic precursor, the first cycle being carried out on the original porous support and each of the subsequent cycles being carried out on the support which has already been impregnated and subjected to at least part of said heat treatment following the preceding impregnation.

12. A process according to claim 11, characterised in that, at the time of at least one of said subsequent cycles, the liquid contains a precursor of an additive suitable for modifying the properties of said ceramic material.

13. A process according to claim 12, characterised in that said additive precursor is selected from the compound $(C_4H_9O)_2Al\text{-}O\text{-}Si(OC_2H_5)_3$ and the ethylates of cerium, hafnium, yttrium and germanium.

14. A process according to claim 11 in conjunction with claim 5, or according to either one of claims 12 and 13, characterised in that said cycles are followed by additional cycles comprising impregnation by a low viscosity liquid solution of at least one precursor forming by heat treatment a refractory mineral material.

15. A process according to claim 14, characterised in that said liquid solution contains as precursor at least one salt of a metal resulting in an oxide the melting point of which is higher than 1600°C, in particular an aluminium salt, a zirconium salt, a cobalt salt or a chromium salt.

16. A process according to any one of the preceding claims, characterised in that the support comprises ceramic fibres immersed in said ceramic powder.

17. A process according to claim 16, characterised in that the fibres are of at least one material selected from carbon, silicon carbide, boron, boron nitride, silicon nitride, mullite and alumina, yttrium aluminate, and oxynitrides and oxycarbides of silicon and/or aluminium and/or titanium.

18. A process according to any one of the preceding claims, characterised in that the ceramic powder is of at least one material the melting point of which is higher than 1700°C, in particular alumina, magnesium, mullite, zirconia, zircon, hafnium oxide, titanium oxide, titanium zirconate, titanium aluminate, yttrium aluminate, lanthanum chromite, chromium oxide, cobalt oxide, noble earth and lanthanide oxides, uranium oxide or actinide oxides.

FIG.1

FIG.3

FIG. 2

FIG. 4

FIG. 5